# EUROPÄISCHE PATENTSCHRIFT

(11) **EP 2 903 798 B1**
(45) Veröffentlichungstag und Bekanntmachung des Hinweises auf die Patenterteilung: **05.04.2017**
(21) Anmeldenummer: 13770458.1
(22) Anmeldetag: 25.09.2013
(51) Int. Cl.: B29C 51/10, B29C 51/46, B29C 63/00, B44C 1/17

(54) **VERFAHREN UND VORRICHTUNG ZUM BEPRÄGEN EINER NICHT-EBENEN OBERFLÄCHE EINES KÖRPERS MIT EINER ÜBERTRAGUNGSLAGE EINER HEISSPRÄGEFOLIE**
METHOD AND DEVICE FOR EMBOSSING AN UNEVEN SURFACE OF A BODY WITH A TRANSFER LAYER OF A HOT EMBOSSING FILM
PROCÉDÉ ET DISPOSITIF POUR ESTAMPER UNE SURFACE NON PLANE D'UN CORPS AVEC UNE COUCHE DE TRANSFERT D'UNE FEUILLE D'ESTAMPAGE À CHAUD

(30) Priorität: 01.10.2012 DE 102012109315
(43) Veröffentlichungstag der Anmeldung: 12.08.2015
(73) Patentinhaber: Leonhard Kurz Stiftung & Co. KG, 90763 Fürth (DE)
(72) Erfinder: DRINIC, Ljubisa, 90445 Nürnberg (DE); RIEHL, Heribert, 90584 Allersberg (DE)
(74) Vertreter: Louis Pöhlau Lohrentz
(86) Internationale Anmeldenummer: PCT/EP2013/070021
(87) Internationale Veröffentlichungsnummer: WO 2014/053381

(56) Entgegenhaltungen:
- EP-A1- 0 668 030
- EP-A2- 1 854 616
- US-A1- 2006 231 983
- US-B1- 6 517 649
- US-B1- 6 524 419

## Beschreibung

Die Erfindung betrifft ein Verfahren und eine Vorrichtung zum Beprägen einer nicht-ebenen Oberfläche eines Körpers mit einer Übertragungslage einer Heißprägefolie. Sie betrifft außerdem ein Verfahren zum Versetzen eines ebenen Folienabschnitts in eine nicht-ebene Gestalt.

Herkömmlicherweise wird bei einem Verfahren zum Beprägen einer nicht-ebenen Oberfläche eines Körpers mit einer Übertragungslage einer Heißprägefolie zunächst der zu beprägende Körper (das Werkstück), der typischerweise aus Kunststoff besteht, manuell auf eine Halteeinrichtung, insbesondere einen Werkstückträger, aufgelegt, wobei das Werkstück bevorzugt geklemmt wird. Der Werkstückhalter wird dann in eine Position gefahren, in der das Prägen erfolgen soll. Die Heißprägefolie wird zugeführt, wobei sie vermittels eines Klemmrahmens über die zu beprägende Werkstückoberfläche gespannt wird, wenn dieser Klemmrahmen in eine Arbeitsposition gefahren wird. Durch Beaufschlagung der Folie mit Unterdruck wird bewirkt, dass sich die Folie an die Oberflächenkontur des Werkstücks anschmiegt. Erst dann wird der eigentliche Prägevorgang unter Aufpressen des Prägestempels (der typischerweise eine Prägeeinheit aus Silikon umfasst) vollzogen. Nach Abschluss des Prägevorgangs wird der Klemmrahmen in seine Ausgangsstellung zurückgefahren, dann auch der Werkstückhalter in seine entsprechende Ausgangsstellung zurückgefahren, und das beprägte Werkstück wird entnommen.

Bei einem solchen Verfahren besteht das ständige Problem, dass die Bildung von Falten und Runzeln in der Heißprägefolie bzw. in der aufgeprägten Übertragungslage vermieden werden soll.

Die US 2006/0231983 A1 beschreibt ein Verfahren zum Dekorieren eines dreidimensionalen Gegenstands, wobei eine Wärmeübertragungsfolie eine Oberfläche eines großen Kunststoffformteils abdeckt, der Umfangsrand der Folie festgeklemmt wird und sich die Folie an die Form des Formteils mittels Vakuumentgasung annähert und eine Formgummi-Form abgesenkt und angehebt wird.

Die US 6,524,419 B1 beschreibt das Dekorieren von Bowlingkugeln. Hierbei wird zuerst in zwei halbkugelförmige Hohlräume jeweils ein transfer sheet eingelegt, dann wird in den unteren Hohlraum die zu dekorierende Bowlingkugel eingelegt und sodann werden die beiden Folien gegen die Bowlingkugel gepresst, indem die beiden Hälften gegeneinander gedrückt werden.

In der EP 0 668 030 A1 wird das Dekorieren von Helmen durch das Aufbringen einer Folie aus vorher verziertem, synthetischen Material beschrieben, wobei sich die Folie unter Wirkung einer Vakuumquelle an den Helm anschmiegt.

Es ist eine Aufgabe der Erfindung, das bisher bekannte Verfahren der geschilderten Gattung zu verbessern und einen Weg aufzuzeigen, wie die Bildung von Falten bzw. Runzeln bei einem solchen Verfahren unterdrückt werden kann.

Die Aufgabe wird in einem Aspekt durch ein Verfahren und eine Vorrichtung zum Beprägen einer nicht-ebenen Oberfläche eines Körpers mit einer Übertragungslage einer Heißprägefolie gelöst.

Das erfindungsgemäße Verfahren zum Beprägen einer nicht-ebenen Oberfläche eines Körpers mit einer Übertragungslage einer Heißprägefolie umfasst, dass die Heißprägefolie mit einem Prägebereich in Anlage an die Oberfläche des Körpers gebracht wird und ein beheizter Prägestempel gegen die Heißprägefolie und die Oberfläche des Körpers gepresst wird, sodass sich im Prägebereich die Übertragungslage von einer Trägerfolie der Heißprägefolie löst und an der Oberfläche des Körpers haftet, wobei bei dem Verfahren die Heißprägefolie vor dem Pressen des Prägestempels gegen die Heißprägefolie und die Oberfläche des Körpers in einem den gesamten Prägebereich umfassenden Bereich vorgeheizt wird.

Die Vorheizung soll insbesondere gleichmäßig erfolgen. Zu diesem Zweck ist der vorzuheizende Bereich großzügig um den gesamten Prägebereich herum zu wählen. Bevorzugt wird auch eine von dem Prägestempel verschiedene Heizeinrichtung eingesetzt.

Durch dieses Vorheizen dehnt sich das Material der Heißprägefolie, insbesondere der Trägerfolie derselben. Eine solche Trägerfolie besteht beispielsweise aus einem geeigneten Polyestermaterial (z. B. PET) oder Polypropylen, Polystyrol, PVC, PMMA, ABS, Polyamid, das für dieses Verfahren des Heißprägens die geeignete Elastizität bzw. Dehneigenschaft aufweist.

Die Übertragungslage der Heißprägefolie weist im Allgemeinen mehrere Schichten auf, insbesondere eine Ablöseschicht (beispielsweise aus Wachs oder wachshaltigen Verbindungen), eine Schutzlackschicht, eine hitzeaktivierbare Kleberschicht. Zusätzlich können eine oder mehrere, flächig partiell oder vollflächig aufgebrachte, Dekorationsschichten und/oder Funktionsschichten enthalten sein. Dekorationsschichten sind zum Beispiel farbige (opake oder transparente oder transluzente) Lackschichten, Metallschichten oder Reliefstrukturen (haptisch oder optisch refraktiv oder optisch diffraktiv wirkend). Funktionsschichten sind beispielsweise elektrisch leitende Schichten (Metall, ITO (ITO = Indium Tin Oxide)), elektrisch halbleitende Schichten (z. B. Halbleiterpolymere), elektrisch nichtleitende Schichten (elektrisch isolierende Lackschichten), optisch mattierende oder antireflektierend wirkende Schichten (z. B. mit mikroskopischen Mattstrukturen) oder die Haftwirkung und/oder die Oberflächenspannung modifizierende Strukturen (Lotus-Effekt-Strukturen oder ähnliche). Zwischen den einzelnen Schichten können zusätzliche Hilfsschichten, insbesondere Haftvermittlerschichten vorhanden sein. Die einzelnen Schichten der Übertragungslage sind etwa zwischen 1 nm und 50 µm dick.

Dadurch, dass sich die Heißprägefolie dehnt, kann sich besonders gut an die Oberfläche des Körpers anschmiegen. Dies gilt in besonderem Maße im Falle, dass das Bringen der Heißprägefolie in Anlage an die Oberfläche des Körpers ein Beaufschlagen mit Unterdruck von der dem Prägestempel abgewandten Seite her umfasst, denn dann wird die leicht ziehbare vorgeheizte Heißprägefolie durch den Unterdruck in vorteilhafter Weise an die Oberfläche des Körpers angeschmiegt. Bevorzugt ist hierbei vorgesehen, dass das Beaufschlagen mit Unterdruck nach Beginn des Vorheizens erfolgt und das Vorheizen bis nach dem Beginn des Beaufschlagens mit Unterdruck vorgesetzt wird. Dann kann nämlich während des Vorgangs des Sich-Anlegens der Folie an die Oberfläche des Körpers aufgrund des Unterdrucks dieses Sich-Anlegens durch das beständige Vorheizen gefördert werden.

In besonderem Maße vorteilhaft ist es, wenn bei anhaltendem Vorheizen das Ausmaß des Unterdrucks erhöht wird, in Stufen oder kontinuierlich. Hier sind zwei Maßnahmen möglich, die alternativ oder ergänzend zueinander getroffen werden können: Bei einer ersten Maßnahme wird der Wert des Unterdrucks erhöht (also der Wert der Differenz zwischen dem Umgebungsdruck einerseits und dem an der dem Prägestempel abgewandten Seite der Heißprägefolie vorliegenden Druck andererseits). Bei einer zweiten Maßnahme wird ein immer größerer Bereich der Heißprägefolie (auf der dem Prägestempel abgewandten Seite derselben) mit dem Unterdruck beaufschlagt. Bei dieser zweiten Maßnahme können zwei oder mehr unterschiedliche Unterdruck-Bereitstellungseinrichtungen vorgesehen sein, die jeweils mit unterschiedlichen Druckkavitäten gekoppelt werden. Diese Druckkavitäten zeichnen sich dadurch aus, dass sie von einem Heißprägefolienabschnitt abgegrenzt werden, insbesondere dadurch, dass dieser dichtgeklemmt ist.

Im Rahmen der ersten Maßnahme, bei der der Wert des Unterdrucks erhöht wird, liegt bevorzugt eine Differenz zwischen dem Umgebungsdruck und dem der den Prägestempel abgewandten Seite der Heißprägefolie vorliegenden Druck anfänglich zwischen 0,01 bar und 0,5 bar und später (also irgendwann anschließend) zwischen 0,25 bar und 0,99 bar, bevorzugt zwischen 0,25 bar und 0,93 bar. Zwischenstufen sind hierbei möglich. Bei der genannten zweiten Maßnahme, bei der der mit Unterdruck beaufschlagte Bereich immer mehr vergrößert wird, können diese Werte für das Ausmaß des Unterdrucks durch unterschiedliche Unterdruck-Bereitstellungseinrichtungen hinsichtlich unterschiedlicher Bereiche der Heißprägefolie gelten.

Wenn das Ausmaß des Unterdrucks in Stufen oder kontinuierlich erhöht wird, wird bevorzugt das Vorheizen fortgesetzt, bis der höchste gewünschte Unterdruck erreicht ist und/oder ein größter Bereich mit dem Unterdruck beaufschlagt ist. Dadurch wird der gesamte Vorgang des Sich-Anschmiegens des Heißprägefolienabschnitts an die Oberfläche des Werkstück-Körpers durch das Vorheizen unterstützt, sodass während der gesamten Dauer des Verfahrens die Faltenbildung in der Heißprägefolie unterdrückt wird.

Das Vorheizen erfolgt bevorzugt über eine Dauer von 1 bis 30 s hinweg. Innerhalb der Vorheizzeit kann der Unterdruck in ein oder mehreren Stufen eingestellt werden, wobei die Stufen in diesem Zeitfenster von 1 bis 30 s variabel einsetzbar sind. Dies bedeutet, dass die Folie auch nur auf einer einzigen Stufe über die gesamte Zeit mittels Unterdruck beaufschlagt werden kann. Des Weiteren können die anderen Stufen in diesem Zeitintervall, zugeschaltet werden, wobei nicht das gesamte Zeitintervall von 30 s ausgenutzt werden muss. Beispielsweise kann eine erste Stufe der Bereitstellung des Unterdrucks nach 0,1 s bis 10 s (seit Beginn des Vorheizens) eingeleitet werden. Eine zweite Stufe der Bereitstellung des Unterdrucks kann ferner nach 10 s bis 15 s eingeleitet werden. Schließlich kann eine dritte Stufe der Bereitstellung des Unterdrucks nach 15 s bis 20 s eingeleitet werden. Das Einleiten der jeweiligen Stufe kann die Erhöhung des Wertes des Unterdrucks beinhalten oder das Zuschalten einer gesonderten Druck-Bereitstellungseinrichtung in Form einer gesonderten Vakuumstufe. Das Einleiten unterschiedlicher Stufen kann auch insbesondere in gleichen Zeitabständen erfolgen. Beispielsweise kann der Zeitabstand zwischen dem Beginn des Vorheizens und der Einleitung der ersten Stufe einerseits und der Zeitabstand zwischen dem Einleiten der ersten Stufe und der zweiten Stufe andererseits klein sein, genauso auch Letzterer und der Zeitabstand zwischen der Einleitung der zweiten Stufe und der Einleitung der dritten Stufe etc.

Die Zeitdauer des Vorheizens sowie die Erzeugung des Unterdrucks in einer oder mehreren Stufen sowie die jeweilige Stärke des Unterdrucks ist insbesondere von der Größe und Form des zu beprägenden Körpers abhängig. Mit der Größe des zu beprägenden Körpers ist insbesondere die Größe der Fläche gemeint, über die die Folie gespannt werden muss. Insbesondere kann es vorteilhaft sein, wenn bei großen Flächen ein höherer Unterdruck angelegt wird und/oder die Länge der Vorheizzeit entsprechend erhöht wird. Bei kleineren Körpern bzw. Flächen kann eine geringere Vorheizzeit und/oder Vakuumstärke ausreichen. Für diese beiden Prozessgrößen Vorheizzeit und Vakuum kann aber auch die Teilegeometrie bestimmend sein. D.h. unabhängig von der Körper- bzw. Flächengröße kann die nötige Vorheizzeit und/oder Vakuum jeweils sehr unterschiedlich sein.

In besonders effizienter Weise wird die Bildung von Falten in der Heißprägefolie unterdrückt, wenn diese in dem den Prägebereich umfassenden Bereich auf eine Temperatur zwischen 80°C und 160°C, bevorzugt zwischen 100°C bis 130°C vorgeheizt wird.

Bei einer bevorzugten Ausführungsform der Erfindung wird eine von dem Prägestempel verschiedene Heizeinrichtung vor Beginn des Vorheizens in die Nähe der Heißprägefolie gefahren und nach Beendigung des Vorheizens zur Freigabe des Weges des Prägestempels zur Heißprägefolie von der Heißprägefolie weggefahren. Durch diese Maßnahme ist es möglich, eine geeignete Heizeinrichtung zu wählen, bei deren Ausgestaltung nicht oder nur in eingeschränktem Maße auf die Ausgestaltung der übrigen Vorrichtung zum Beprägen Rücksicht genommen werden muss. Die Heizeinrichtung kann insbesondere eine ebene Oberfläche, welche insbesondere über die gesamte Oberfläche gleichmäßig Wärmestrahlung abgibt, aufweisen, die parallel zur Ebene der Heißprägefolie oder eines Abschnitts derselben angeordnet wird. Die Heizeinrichtung kann insbesondere zwischen dem Prägestempel und die Heißprägefolie bzw. über die Heißprägefolie gefahren werden.

Bei einer weiteren bevorzugten Ausführungsform des Verfahrens umfasst das Bringen der Heißprägefolie in Anlage an die Oberfläche des Körpers ein Klemmen der Heißprägefolie mittels eines Klemmrahmens, und dieses Klemmen erfolgt vor Beginn des Vorheizens. Mit Hilfe eines solchen Klemmrahmens wird eine definierte Ausgangssituation geschaffen, insbesondere vor der Beaufschlagung des Heißprägefolienabschnitts mit Unterdruck. Das Klemmen kann insbesondere durch eine geeignete Einrichtung erfolgen, die den zur Verfügung stehenden Platz gemeinsam mit der Heizeinrichtung nutzt. So kann beispielsweise die Klemmeinrichtung eine Ausgangsstellung haben, aus der sie zum Zwecke des Klemmens herausgefahren wird, bevor dann die Heizeinrichtung genau dorthin gefahren wird, wo die Klemmeinrichtung sich in der Ausgangsstellung befand.

Zur Lösung der Aufgabe gehört auch eine Vorrichtung zum Beprägen einer nicht-ebenen Oberfläche eines Körpers mit einer Übertragungslage einer Heißprägefolie, wobei die Vorrichtung aufweist:
- eine Halteeinrichtung zum Halten eines zu beprägenden Körpers,
- eine Zufuhreinrichtung zum Zuführen von Heißprägefolienabschnitten eines Folienbands, insbesondere in einen Arbeitsbereich (wobei die Zufuhreinrichtung im Wesentlichen aus einer abzuwickelnden Rolle mit dem Folienband und einer aufzuwickelnden Rolle mit dem Folienband und aus Führungsmitteln bestehen kann),
- einer Klemmeinrichtung zum dichten Einklemmen (also Dichtklemmen) eines Heißprägefolienabschnitts,
- einer Einrichtung zum Bereitstellen von Unterdruck in einem durch die Klemmeinrichtung und einen darin eingeklemmten Heißprägefolienabschnitt vorgegebenen Bereich,
- einem beheizbaren Prägestempel, der insbesondere Silikon umfasst (nämlich v. A. für die eigentliche Prägefläche),
- einer von dem beheizten Prägestempel verschiedenen ein- und ausfahrbaren Heizeinrichtung (zum Ein- und Ausfahren in und aus dem Arbeitsbereich) zum Vorheizen des gesamten in der Klemmeinrichtung eingeklemmten Heißprägefolienabschnitts, nämlich insbesondere durch (Einwirkung von) Wärmestrahlung.

Durch das vorgesehene Vorheizen werden wirkungsvoll Falten in dem eingeklemmten Heißprägefolienabschnitt unterbunden. Durch die Trennung der Heizeinrichtung von dem beheizten Prägestempel kann das Vorheizen zielgerecht und auf hinsichtlich der Form des zu beprägenden Körpers geeignete Weise erfolgen, ohne dass auf andere Vorrichtungseinrichtungen (wie etwa den Prägestempel) Rücksicht genommen werden muss.

Bevorzugt ist die Einrichtung zum Bereitstellen von Unterdruck ausgelegt, in mehreren Stufen den Wert des Unterdrucks zu erhöhen und/oder den mit Unterdruck beaufschlagten Bereich zu vergrößern. Durch diese Maßnahme kann im Zusammenwirken mit der Heizeinrichtung das Sich-Anschmiegen des Heißprägefolienabschnitts an die Oberfläche des Körpers gefördert werden.

Bevorzugt umfasst die Vorrichtung eine Steuereinrichtung zum Ansteuern sowohl der Heizeinrichtung als auch der Einrichtung zum Bereitstellen von Unterdruck, und diese Steuereinrichtung ist ausgelegt (nämlich insbesondere geeignet programmiert), zunächst die Heizeinrichtung in Betrieb zu setzen und sodann die Einrichtung zum Bereitstellen von Unterdruck nacheinander zum Beaufschlagen eines dicht eingeklemmten Heißprägefolienabschnitts mit Unterdruck in steigendem Ausmaß (also mit sich erhöhendem Wert für den Unterdruck und/oder sich vergrößerndem Beaufschlagungsbereich) zu veranlassen.

Unabhängig davon, ob der Unterdruck in steigendem Ausmaß bereitgestellt wird, ist eine solche Steuereinrichtung wegen der koordinierten Ansteuerung der Heizeinrichtung und der Einrichtung zum Bereitstellen von Unterdruck geeignet, in besonderem Maße das Sich-Anschmiegen des Heißprägefolienabschnitts an den Körper zu unterstützen. Dies gilt aber besonders dann, wenn das Ausmaß der Bereitstellung des Unterdrucks während des Betriebs der Heizeinrichtung gesteigert wird.

In einem weiteren Aspekt wird die Aufgabe gelöst durch ein Verfahren zum Versetzen eines ebenen Folienabschnitts in eine nicht-ebene Gestalt, wobei der Folienabschnitt beheizt wird und durch Beaufschlagung mit Unterdruck von einer Seite her an einen Körper geschmiegt wird, wobei während einer Fortdauer des Beheizens der Unterdruck bereitgestellt wird und sein Ausmaß nach und nach stufenweise erhöht wird, indem sein Wert erhöht wird und/oder die Größe eines Bereichs, an dem er bereitgestellt wird, vergrößert wird, wobei der Unterdruck in einer oder mehreren Stufen erhöht wird, wobei die Stufen zugeschaltet werden und wobei das Einleiten einer jeweiligen Stufe die Erhöhung des Wertes des Unterdrucks beinhaltet.

Nachfolgend wird eine bevorzugte Ausführungsform des erfindungsgemäßen Verfahrens unter Bezug auf die Zeichnung beschrieben, in der
- Fig. 1: eine perspektivische Ansicht eines im Rahmen des erfindungsgemäßen Verfahrens beprägbaren Werkstücks ist,
- Fig. 2: einen Schnitt durch das Werkstück aus Fig. 1 zeigt,
- Fig. 3: eine perspektivische Ansicht einer Werkstückaufnahmeeinrichtung zeigt, die zu dem Werkstück aus Fig. 1 und Fig. 2 passt,
- Fig. 4: einen Schnitt durch die Werkstückaufnahmeeinrichtung aus Fig. 3 zeigt,
- Fig. 5: eine perspektivische Ansicht eines beheizbaren Prägestempels zeigt, wie er beim Beprägen des Werkstücks aus Fig. 1 und Fig. 2 eingesetzt werden kann,
- Fig. 6: einen Schnitt durch den Prägestempel aus Fig. 5 zeigt,
- Fig. 7 - 15: jeweils einen Schnitt durch eine erfindungsgemäße Hubprägemaschine in einer speziellen Ausführungsform zur Erläuterung unterschiedlicher Schritte einer Ausführungsform des erfindungsgemäßen Verfahrens zeigen, wie es in Bezug auf das Werkstück aus Fig. 1 und Fig. 2 unter Einsatz der Werkstückaufnahmeeinrichtung aus Fig. 3 und Fig. 4 und des Prägestempels aus Fig. 5 und Fig. 6 ausgeführt wird, und
- Fig. 16: eine perspektivische Ansicht eines zweiten Werkstücks zeigt, an dem das erfindungsgemäße Verfahren in einer Ausführungsform anwendbar, um eine Oberfläche desselben zu beprägen.

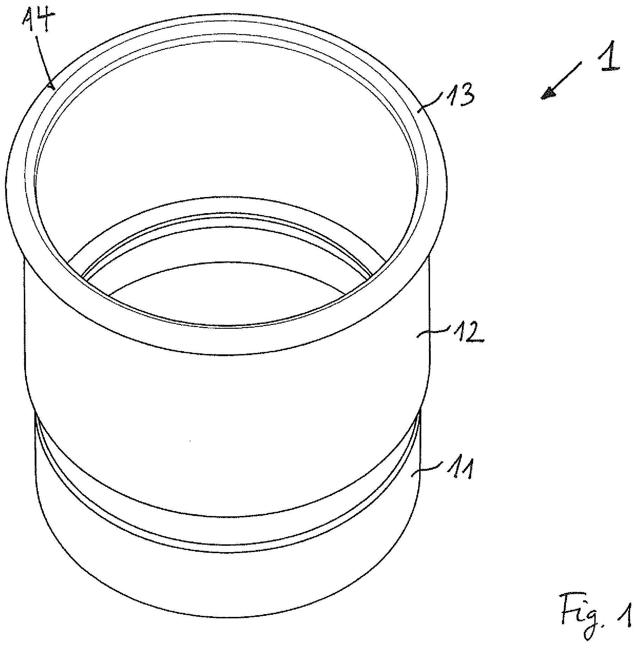

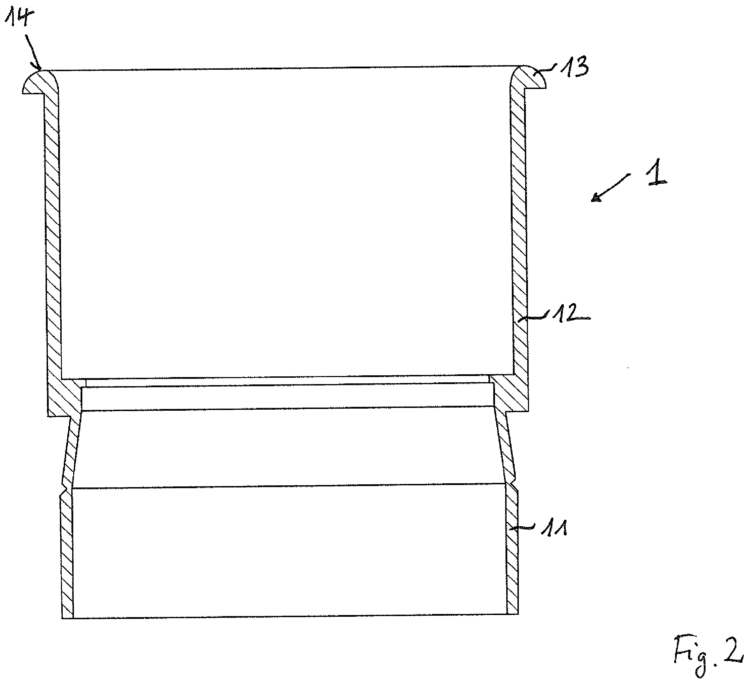

Ein in den Fig. 1 und 2 einzeln gezeigtes und im Ganzen mit 1 bezeichnetes Wertstück ist rohrförmig, im Wesentlichen zylindrisch, und zwar weist es einen in Fig. 2 im Schnitt zu erkennenden Fußbereich 11 und auf diesem Fußbereich einen perfekt zylindrischen oder leicht konisch eingewölbten oberen Bereich 12 auf. Am oberen Ende des oberen Bereichs 12 ist eine Wulst 13 angeordnet, und bei dem vorliegenden Verfahren geht es darum, genau die Oberfläche 14 dieser Wulst 13 mit einer Dekorfolie, insbesondere einer Übertragungslage einer Heißprägefolie zu beprägen.

Beispielsweise hat das Werkstück 1 eine Gesamthöhe von 89 mm, einen Innendurchmesser von 74 mm, einen Außendurchmesser von 85 mm, und der Krümmungsradius der Wulst 13 an der am stärksten gekrümmten Stelle beträgt 3,8 mm.

Das Werkstück 1 besteht aus Acrylnitril-Butadien-Styrol (ABS), aus Polycarbonat (PC) oder ist aus einer Mischung dieser beiden Materialen (z. B. ABS-PC) zusammen hergestellt.

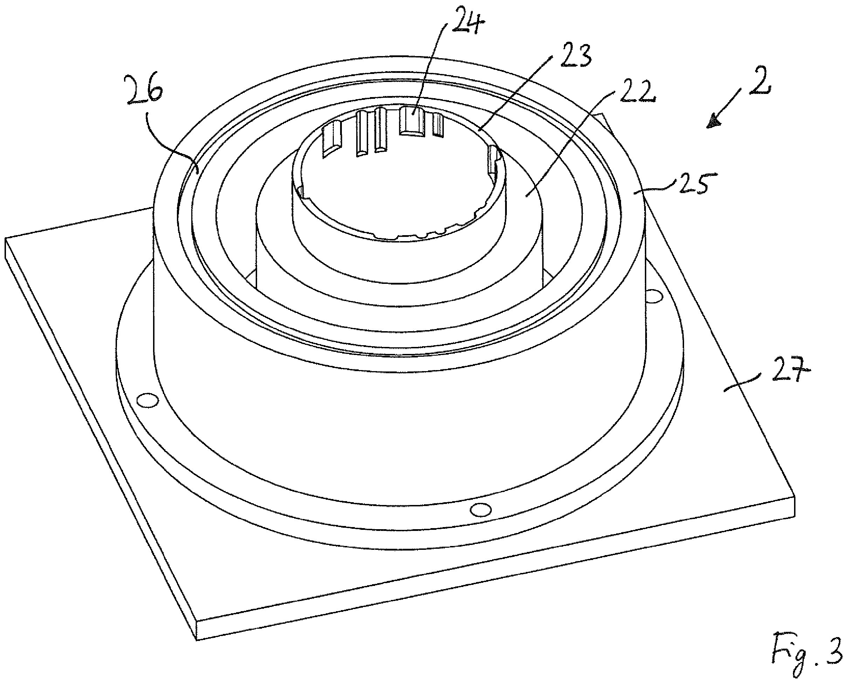

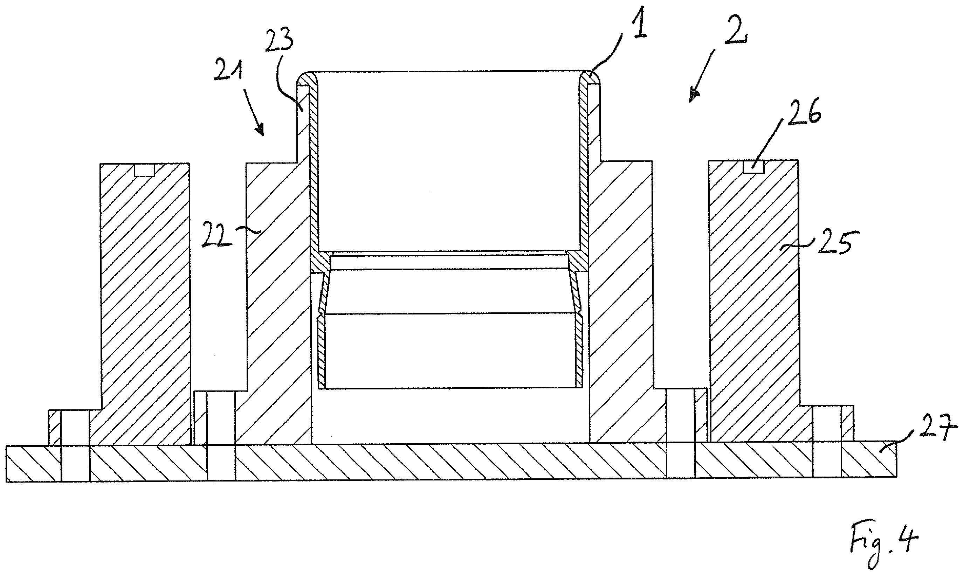

Die im Ganzen in Fig. 3 und 4 gezeigte und dort mit 2 bezeichnete Werkstückaufnahmeeinrichtung für das Werkstück 1 aus Fig. 1 und 2 umfasst das eigentliche Aufnahmeelement 21 mit einem unteren stabilen zylindrischen Dickwandbereich 22 und einem oberen Dünnwandbereich 23, an dem sich die Wulst 13 des Werkstücks 1 abstützen kann. Fig. 4 zeigt das Werkstück 1 in die Werkstückaufnahmeeinrichtung 2 aufgenommen. Zur Aufnahme dienen die in Fig. 3 gezeigten Ausnehmungen 24 in dem Dünnwandbereich 23.

Die Werkstückaufnahmeeinrichtung weist ferner eine äußere zylindrische Wand 25 auf. Auf deren Oberseite ist eine Ringnut 26 ausgebildet, in der ein Dichtring aufnehmbar ist (der in den Fig. 3 und 4 nicht gezeigt ist). Das eigentliche Aufnahmeelement 21 ist im Bereich seines Dickwandbereichs 22 an einer Bodenplatte 27 angeordnet, und auch die äußere zylindrische Wand 25 ist an dieser Bodenplatte 27 angeordnet.

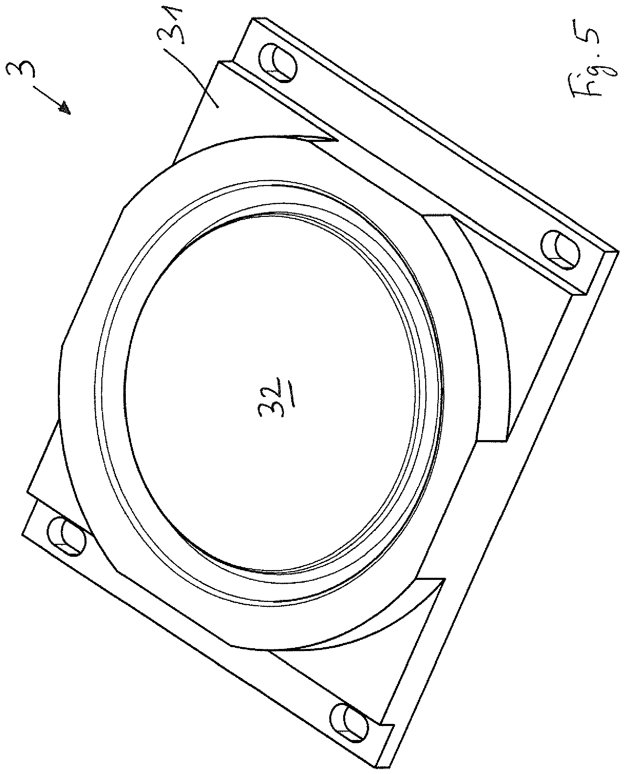

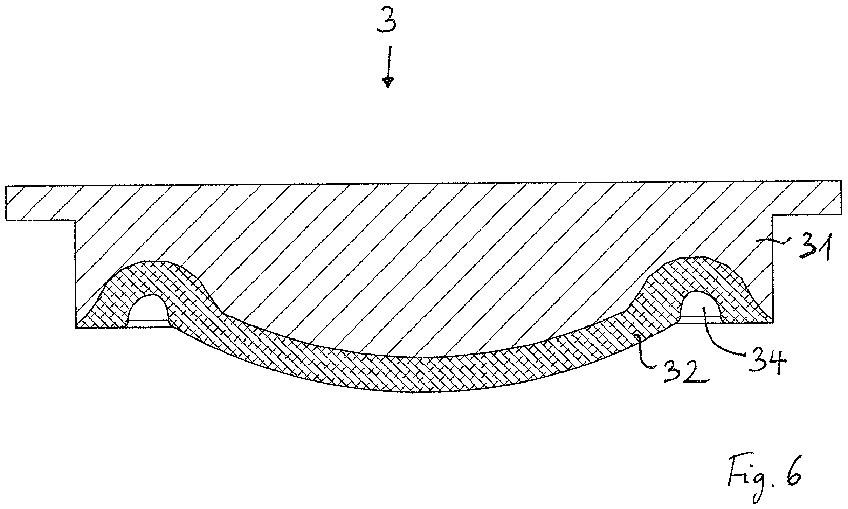

Ein in den Fig. 5 und 6 gezeigter und dort im Ganzen mit 3 bezeichneter Prägestempel weist den eigentlichen Stempelkörper 31 auf, der beispielsweise aus einem formstabilen Metall besteht, und dieser Stempelkörper 31 trägt die eigentliche Stempeloberfläche 32, welche vorliegend aus Silikon besteht und von Heizelementen (die in den Figuren nicht gezeigt sind) durchdrungen ist oder an einem, den Stempelkörper 31 von der Rückseite her aufheizenden Heizelement rückseitig anliegt bzw. angrenzt. Die Stempeloberfläche 32 ist leicht konvex gewölbt und weist einen konkaven Bereich 34 nach Art einer Ringnut auf. Dieser konkave Bereich 34 ist komplementär zu der Wulst 13 des zu beprägenden Werkstücks 1.

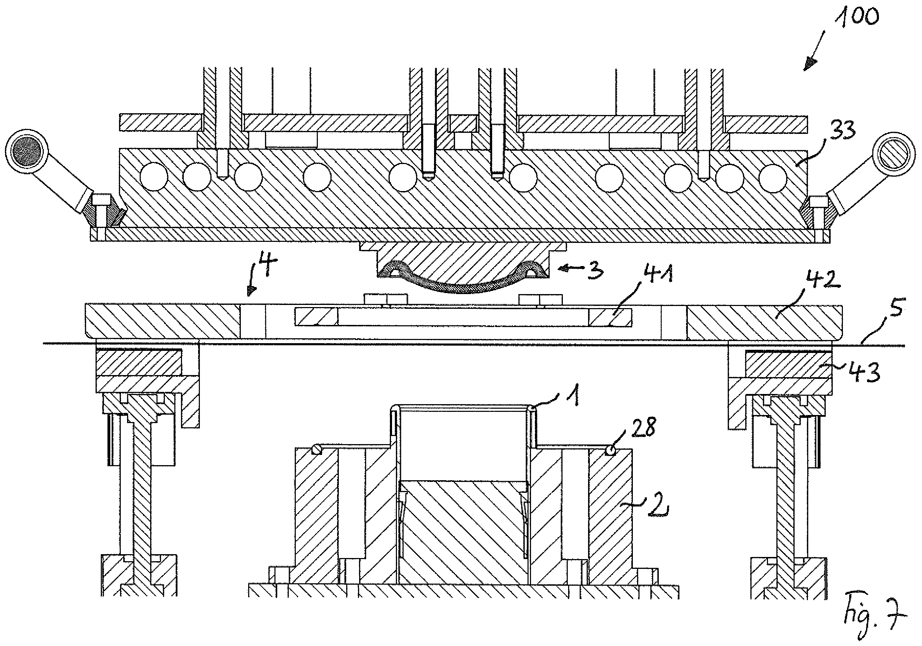

Die Fig. 7 bis 15 zeigen ein im Ganzen mit 100 bezeichnete Hubprägemaschine als Ausführungsbeispiel einer Vorrichtung zum Beprägen einer nicht-ebenen Oberfläche eines Körpers mit einer Übertragungslage einer Heißprägefolie.

Im unteren Bereich ist die Werkstückaufnahmeeinrichtung 2 gezeigt, welche das zylindrische Werkstück 1 trägt und hält. In der Ringnut 26 der äußeren zylindrischen Wand 25 ist hierbei ein Dichtring 28 aufgenommen.

Im oberen Bereich der Figuren ist jeweils der Prägestempel 3 zu sehen, wobei dieser an einer Presse 33 angeordnet ist.

Eine Heißprägefolie 5 ist auf in den Figuren nicht gezeigte Weise von einem Heißprägefolienband abgewickelt und der Hubprägemaschine 100 zugeführt. Auf der anderen Seite wird die verbrauchte Heißprägefolie, d. h. die Trägerfolie und die restliche, partiell nicht abgelöste Übertragungslage abgeführt und ggf. auf eine Rolle aufgewickelt.

Eine Heißprägefolie nach Art der Heißprägefolie 5 besteht aus einer in den Figuren nicht gezeigten Trägerfolie, die beispielsweise aus einem geeigneten Polyestermaterial besteht, und auf dieser Trägerfolie ist, getrennt von dieser möglicherweise durch eine gesonderte Ablöseschicht, die so genannte Übertragungslage oder Übertragungsschicht angeordnet. Bei der Übertragungslage oder Übertragungsschicht handelt es sich um ein oder mehrere Teilschichten, durch die im vorliegenden Fall ein Dekor bereitgestellt wird, das auf die Oberfläche 14 der Wulst 13 des Werkstücks 1 übertragen werden soll. Die Übertragungslage haftet auf der Oberfläche 14 des Werkstücks 1 mittels eines hitzeaktivierbaren Klebers, der beim Heißprägen aktiviert wird, dadurch aufschmilzt und beim Abkühlen wieder in den festen Zustand übergeht und eine entsprechend vorteilhafte Verklebung zwischen Übertragungslage und Oberfläche 14 herstellt.

Das erfindungsgemäße Verfahren läuft ab wie nachfolgend beschrieben:

In Fig. 7 ist ein Klemmrahmen 4 gezeigt, der ein inneres Klemmrahmenoberteil 41 aufweist, das zu der äußeren zylindrischen Wand 25 der Werkstückaufnahmeeinrichtung 2 passt, und der Klemmrahmen 4 weist ferner ein äußeres Klemmrahmenoberteil 42 und zugehörig ein äußeres Klemmrahmenunterteil 43 auf, die passend zueinander ausgebildet sind. In Fig. 7 ist eine Ausgangstellung des Klemmrahmens 4 dargestellt, bei der die Heißprägefolie 5 noch von dem Klemmrahmen 4 unbeeinflusst ist.

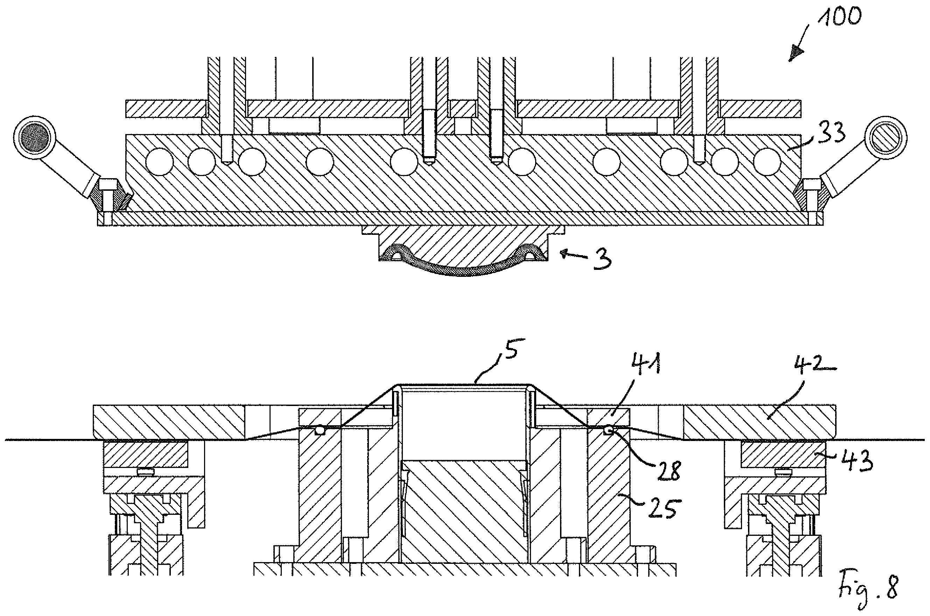

Der Klemmrahmen 4 wird nun aber heruntergefahren in die in Fig. 8 gezeigte Klemmposition. In dieser Klemmposition liegt das innere Klemmrahmenoberteil 41 auf der äußeren zylindrischen Wand 25 der Werkstückaufnahmeeinrichtung 2 mit der Heißprägefolie 5 dazwischen auf, wobei wegen des Vorhandenseins des Dichtrings 28 ein innerer Heißprägefolienabschnitt der Heißprägefolie 5 abgegrenzt und abgedichtet wird. Die Anordnung wird dadurch stabilisiert, dass die Heißprägefolie 5 auch zwischen dem äußeren Klemmrahmenoberteil 42 und dem äußeren Klemmrahmenunterteil 43 eingeklemmt wird.

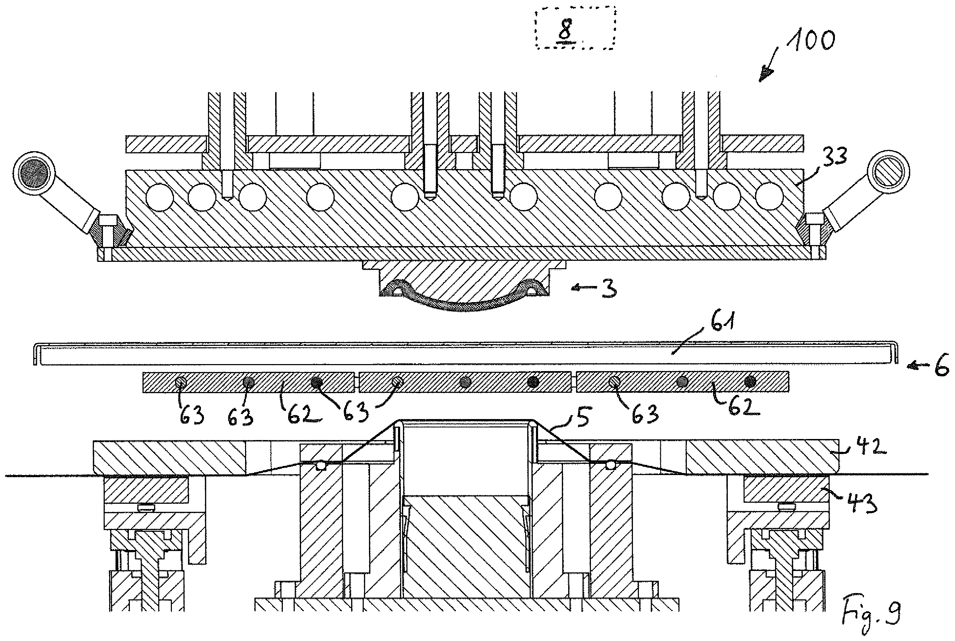

Nun wird, wie Fig. 9 zu sehen, eine Heizeinrichtung 6 in den in den Figuren gezeigten Arbeitsbereich der Hubprägemaschine 100 eingefahren. Die Heizeinrichtung 6 umfasst einen Träger 61 und vorliegend drei ebene Heizplatten 62, die von Heizstäben 63 durchdrungen sind und im Betrieb gleichmäßig Wärme zu der Heißprägefolie 5 hin abstrahlen.

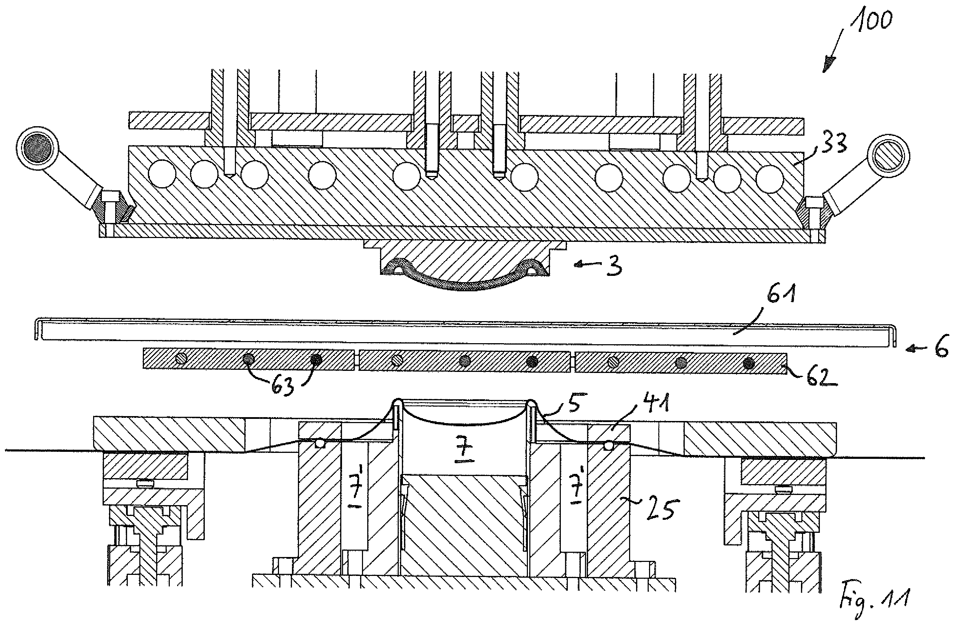

Im Rahmen des Verfahrens steuert eine Steuereinrichtung 8 die Komponenten der Hubprägemaschine 100 geeignet an. Sie kann hierbei für das Festklemmen des Heißprägefolienabschnitts der Heißprägefolie 5 verantwortlich sein und auch für das Einfahren der Heizeinrichtung 6. Vorliegend steuert die Steuereinrichtung 8 die Heizeinrichtung 6 derart an, dass das Abstrahlen von Wärme beginnt. Der Vorgang des Heizens wird auch noch während der nachfolgenden Schritte fortgesetzt, bis zu der in Fig. 11 gezeigten Situation.

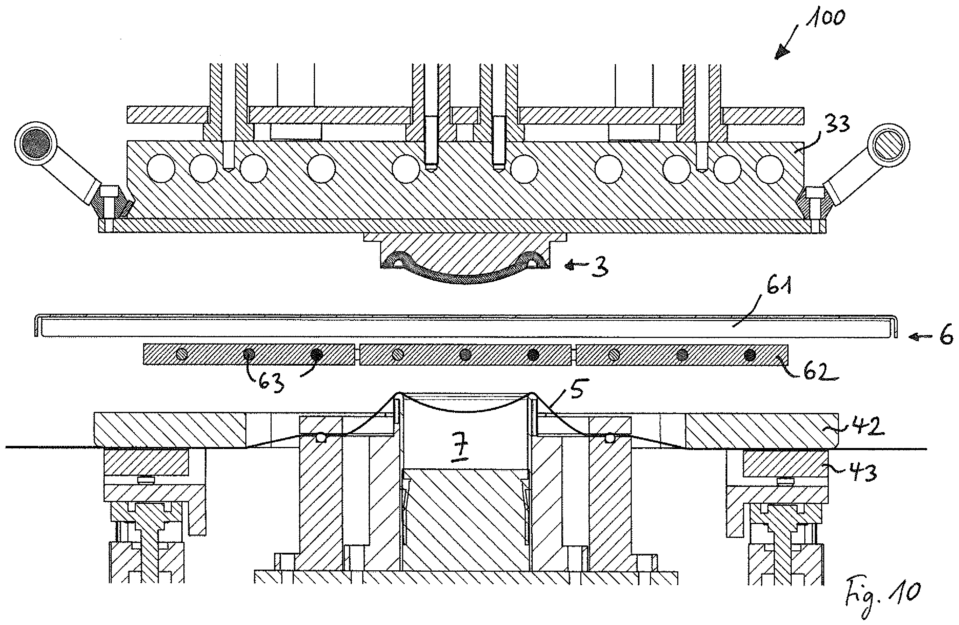

Im Beispiel wird 4 s nach Beginn des Heizens Luft aus einem ersten, von der Heißprägefolie 5 begrenzten Raum 7, der insbesondere im Innern des Werkstücks 1 ausgebildet ist, abgepumpt, d. h. der Raum 7 wird mit einem Unterdruck beaufschlagt. Dies führt zu der in Fig. 10 zu sehenden Situation, bei der der Folienabschnitt ins Innere des Werkstücks 1 hinein gezogen wird. Das Beheizen wird hierbei fortgesetzt. Durch das Fortdauern des Beheizens ist gewährleistet, dass die Heißprägefolie 5 im Bereich des Werkstücks 1 nicht oder nur wenige Falten bildet und sich möglichst glatt an die Wulst 13 des Werkstücks 1 anschmiegt.

Nach weiteren 2 s wird - bei fortwährendem Beheizen - nun ein weiterer Raum 7' mit Unterdruck beaufschlagt. Es handelt sich hierbei vorliegend um den Raum zwischen dem Dickwandbereich 22 der Werkstückaufnahmeeinrichtung 2 und deren äußerer zylindrischen Wand 25. Die Heißprägefolie 5 schmiegt sich daher noch enger an die Wulst 13 des Werkstücks 1 an, wobei sie wegen des fortdauernden Beheizens durch die Heizeinrichtung 6 keine oder zumindest wenige Falten bildet.

Die Folientemperatur während des Vorheizens der Heißprägefolie soll zwischen 100°C und 130°C betragen. Der Unterdruck im Raum 7 soll ca. 0,1 bar betragen, und der Unterdruck im Raum 7' ca. 0,91 bar betragen. Die gesamte Heizdauer endet nach ca. 11 s.

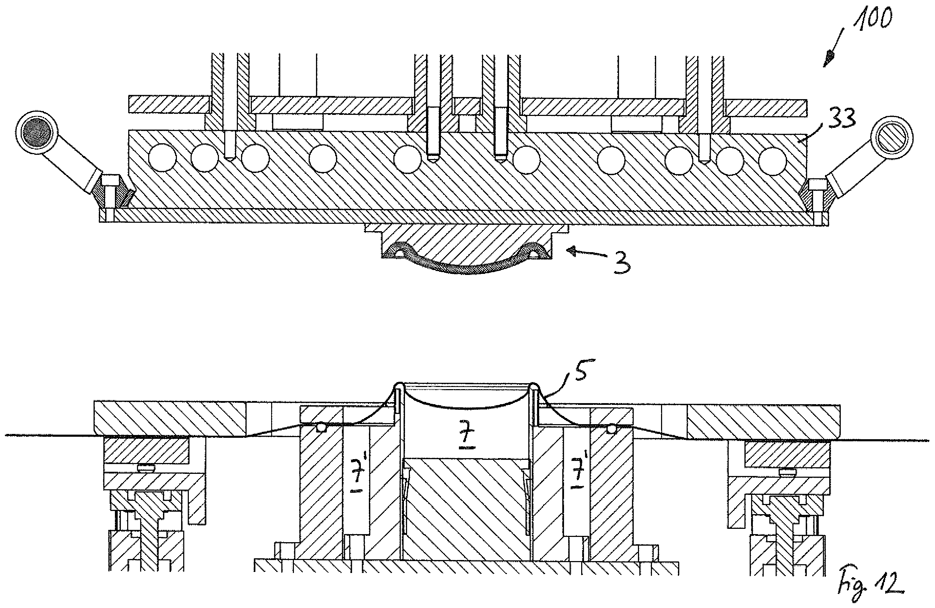

Nach Beendigung des Vorheizens wird die Heizvorrichtung 6 wieder aus dem in den Fig. 7 bis 15 gezeigten Arbeitsbereich der Hubprägemaschine 100 herausgefahren, sodass die in Fig. 12 gezeigte Situation gegeben ist.

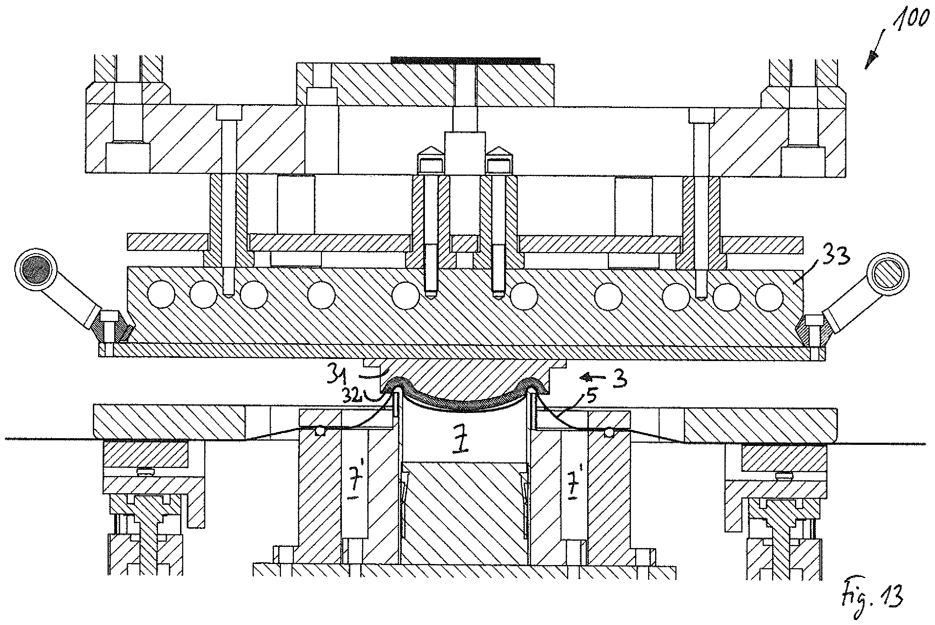

Dem nachfolgend wird die Presse 33 mit dem Stempel 3 nach unten in die Fig. 13 gezeigte Lage verfahren, wobei die Stempeloberfläche 32 beheizt ist, sodass im Bereich der Ringnut 34 ein Heißprägen erfolgt, also gerade die Übertragungslage von dem Heißprägefolienabschnitt der Heißprägefolie 5 auf die Fläche 14 übertragen wird.

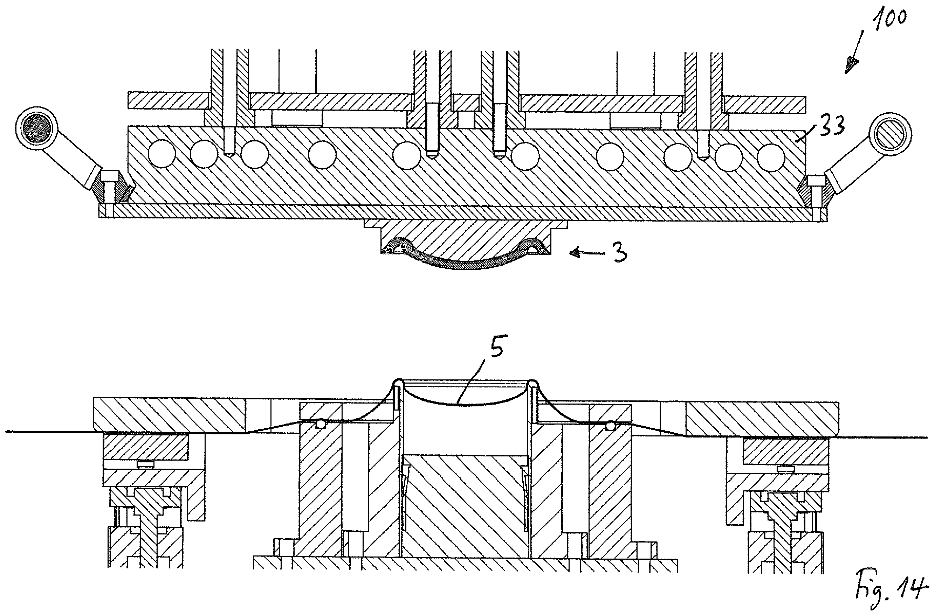

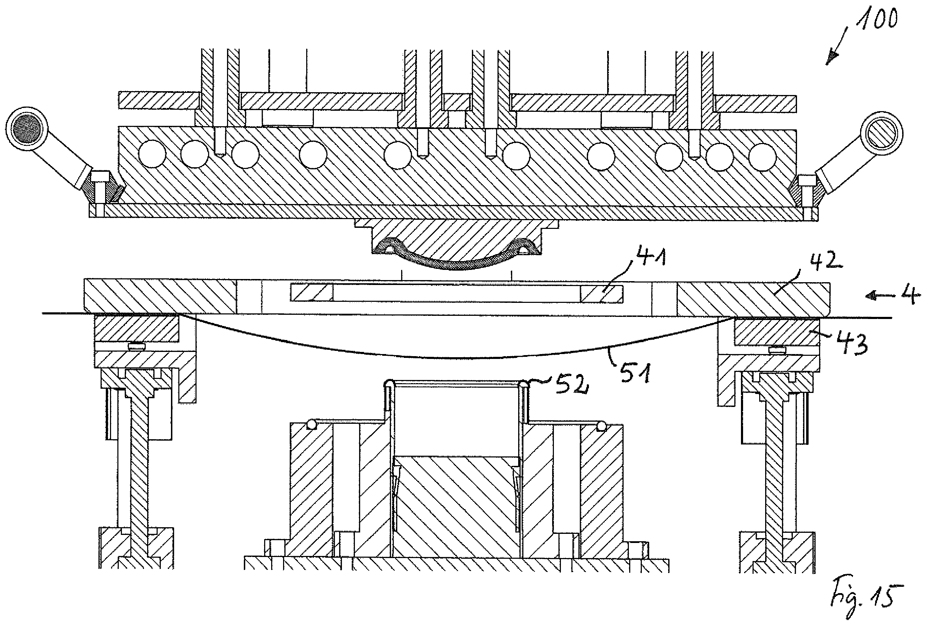

Ferner nachfolgend wird, siehe Fig. 14, die Presse 33 wieder nach oben gefahren, und schließlich wird, wie in Fig. 15 zu sehen, der Klemmrahmen 4 aus seiner Klemmstellung wieder in die Ausgangsstellung zurückversetzt. Der Klemmrahmen 4 führt die verbleibende Heißprägefolie 51 (also die Trägerfolie ohne die insbesondere bereichsweise übertragene Übertragungslage) von dem Werkstück 1 weg, wohingegen die Übertragungslage 53 auf der Fläche 14 der Wulst 13 des Werkstücks 1 verbleibt, siehe die Bezugszahl 52. In einem nachfolgenden Schritt kann dann das Werkstück 1 aus der Werkstückaufnahmeeinrichtung 2 entnommen werden, und das Verfahren ist beendet.

Das Verfahren kann auch an anderen Werkstücken eingesetzt werden, wovon ein Beispiel als Werkstück 1' in Fig. 16 gezeigt ist. Das Werkstück 1' ist U-förmig und hat einen Grundkörper 11' mit zwei Schenkeln 12'. Es gibt eine umlaufende Prägefläche 14', zu der eine im Wesentlichen ebene Fläche 15' benachbart ist, welche nicht beprägt werden soll.

Bei Bereitstellung einer geeigneten Werkstückaufnahmeeinrichtung und Anpassung der Form und Dimension des Klemmrahmens 4 und des Prägestempels 3 kann auch dieses Werkstück 1' unter Verwendung derselben Hubprägemaschine 100 beprägt werden.

Das Werkstück 1' weist beispielsweise eine Gesamthöhe von 27 mm auf, eine Gesamtlänge von 134 mm, eine Breite von 146 mm, und an der Prägefläche 14' ist die Krümmung im Bereich des stärksten Krümmungsradius ca. 5 mm groß. Es lässt sich ebenfalls als Material Acrylnitril-Butadien-Styrol (ABS) oder Polycarbonat (PC) vorsehen, oder Zusammensetzungen aus diesen Materialen.

Anhand der Fig. 16 soll ersichtlich werden, dass das erfindungsgemäße Verfahren nicht auf die Anwendung bei rein zylindrischen oder rohrförmigen Werkstücken beschränkt ist. Es ist nicht einmal erforderlich, dass eine durch zwei bis drei Seiten abgegrenzte Halböffnung vorhanden ist.

Durch das erfindungsgemäße Verfahren wird wegen des Schrittes des Vorheizens durch die Heizeinrichtung 6 unabhängig von der Beheizung des Prägestempels 3 für ein besonders effizientes und faltenfreies Sich-Anschmiegen der Heißprägefolie 5 an die Prägefläche 14 (bzw. 14') gesorgt. Das Verfahren eignet sich insbesondere dann, wenn solche Prägeflächen einen besonders kleinen Prägeradius aufweisen, also einen besonders kleinen Radius im Bereich der größten Krümmung.

Die beschriebenen Zeitabfolge von Vorheizen und Beaufschlagung einer Folie mit Unterdruck, wie sie durch die Steuereinrichtung 8 gesteuert erfolgt, lässt sich auch im Zusammenhang mit anderen Verfahren effizient einsetzen, z. B. beim Hinterspritzen von Dekorfolien, wenn sich eine solche Dekorfolie faltenfrei in eine Spritzgussform einschmiegen soll, oder beim Tiefziehen von Folienbahnen oder Folienblättern verschiedenster Stärken bzw. Dicken.

### Bezugszeichenliste

- 1: Körper
- 2: Halteeinrichtung
- 3: Prägestempel
- 4: Klemmrahmen
- 5: Heißprägefolie
- 6: Heizeinrichtung
- 7, 7': abgepumpte Räume
- 8: Steuereinrichtung
- 11: Fußbereich des Körpers 1
- 12: oberer Bereich des Körpers 1
- 13: Wulst
- 14: Oberfläche der Wulst 13
- 21: Aufnahmeelement
- 22: Dickwandbereich
- 23: Dünnwandbereich
- 24: Ausnehmungen
- 25: zylindrische äußere Wand
- 26: Ringnut
- 27: Bodenplatte
- 28: Dichtring
- 31: Stempel körper
- 32: Stempeloberfläche
- 33: Presse
- 34: konkaver Bereich
- 41: inneres Klemmrahmenoberteil
- 42: äußeres Klemmrahmenoberteil
- 43: äußeres Klemmrahmenunterteil
- 52: Übertragungslage
- 61: Träger
- 62: Heizplatten
- 63: Heizstäbe
- 100: Hubprägemaschine

## Patentansprüche

1. Verfahren zum Beprägen einer nicht-ebenen Oberfläche (14) eines Körpers (1) mit einer Übertragungslage (52) einer Heißprägefolie (5), bei dem die Heißprägefolie (5) mit einem Prägebereich in Anlage an die Oberfläche (14) des Körpers gebracht wird und ein beheizter Prägestempel (3) gegen die Heißprägefolie (5) und die Oberfläche (14) des Körpers (1) gepresst wird, sodass sich im Prägebereich die Übertragungslage (52) von einem Träger (51) der Heißprägefolie löst und an der Oberfläche (14) des Körpers (1) haftet, wobei die Heißprägefolie (5) vor dem Pressen des beheizten Prägestempels (3) gegen die Heißprägefolie (5) und die Oberfläche (14) des Körpers (1) in einem den gesamten Prägebereich (52) umfassenden Bereich vorgeheizt wird.

2. Verfahren nach Anspruch 1, bei dem das Bringen der Heißprägefolie in Anlage an die Oberfläche des Körpers ein Beaufschlagen mit Unterdruck von der dem Prägestempel (3) abgewandten Seite her umfasst, wobei das Beaufschlagen mit Unterdruck nach Beginn des Vorheizens erfolgt und das Vorheizen bis nach dem Beginn des Beaufschlagens mit Unterdruck fortgesetzt wird.

3. Verfahren nach Anspruch 2, bei dem das Ausmaß des Unterdrucks in Stufen oder kontinuierlich erhöht wird, indem der Wert des Unterdrucks erhöht wird und/oder ein immer größerer Bereich (7, 7') mit dem Unterdruck beaufschlagt wird.

4. Verfahren nach Anspruch 3, bei dem eine Differenz zwischen dem Umgebungsdruck und dem an der dem Prägestempel (3) abgewandten Seite der Heißprägefolie (5) vorliegenden Druck zwischen 0,08 bar und 0,93 bar liegt und insbesondere in verschiedenen Stufen in einem definierten Zeitintervall variiert wird.

5. Verfahren nach Anspruch 3 oder 4, bei dem das Vorheizen fortgesetzt wird, bis der höchste gewünschte Unterdruck erreicht ist und/oder ein größter Bereich mit dem Unterdruck beaufschlagt ist.

6. Verfahren nach einem der Ansprüche 2 bis 5, bei dem das Vorheizen über eine Dauer von 1 bis 30 s erfolgt, insbesondere variabel erfolgt, und/oder ein erster Abschnitt der Heißprägefolie über die gesamte Dauer des Vorheizens mit Unterdruck beaufschlagt wird oder ab einem Zeitpunkt von 0,1 s bis 10 s seit Beginn des Vorheizens mit Unterdruck beaufschlagt wird und/oder ein zweiter Abschnitt der Heißprägefolie ab einem Zeitpunkt von zwischen 10 s bis 15 s nach Beginn des Vorheizens mit Unterdruck beaufschlagt wird und/oder ein dritter Abschnitt der Heißprägefolie nach einer Zeitdauer von zwischen 15 s bis 20 s seit Beginn des Vorheizens mit Unterdruck beaufschlagt wird.

7. Verfahren nach einem der vorhergehenden Ansprüche, bei dem die Heißprägefolie in dem den Prägebereich umfassenden Bereich auf eine Temperatur zwischen 80°C und 160°C, bevorzugt zwischen 100°C bis 130°C vorgeheizt wird.

8. Verfahren nach einem der vorhergehenden Ansprüche, bei dem eine von dem Prägestempel (3) verschiedene Heizeinrichtung (6) vor Beginn des Vorheizens in die Nähe der Heißprägefolie (5) gefahren wird und nach Beendigung des Vorheizens zur Freigabe des Weges des Prägestempels (3) zur Heißprägefolie (5) von der Heißprägefolie (5) weggefahren wird.

9. Verfahren nach einem der vorhergehenden Ansprüche, bei dem das Bringen der Heißprägefolie (5) in Anlage an die Oberfläche (14) des Körpers (1) ein Klemmen der Heißprägefolie mittels eines Klemmrahmens (4) umfasst, wobei das Klemmen vor Beginn des Vorheizens erfolgt.

10. Vorrichtung zum Beprägen einer nicht-ebenen Oberfläche eines Körpers (1) mit einer Übertragungslage einer Heißprägefolie, mit:
- einer Halteeinrichtung (2) zum Halten eines zu beprägenden Körpers (1),
- einer Zufuhreinrichtung zum Zuführen von Heißprägefolienabschnitten eines Folienbands, insbesondere in einen Arbeitsbereich,
- einer Klemmeinrichtung (4) zum dichten Einklemmen eines Heißprägefolienabschnitts (5),
- einer Einrichtung zum Bereitstellen von Unterdruck in einem durch die Klemmeinrichtung und einen darin eingeklemmten Heißprägefolienabschnitt vorgegebenen Bereich (7),
- einem beheizbaren Prägestempel (3), der insbesondere Silikon umfasst,
**gekennzeichnet durch** - eine von dem beheizten Prägestempel (3) verschiedene ein- und ausfahrbare, insbesondere in und aus dem Arbeitsbereich ein- und ausfahrbare, Heizeinrichtung (6) zum Vorheizen des gesamten in der Klemmeinrichtung eingeklemmten Heißprägefolienabschnitts, insbesondere **durch** Wärmestrahlung.

11. Vorrichtung nach Anspruch 10, wobei die Einrichtung zum Bereitstellen von Unterdruck ausgelegt ist, in mehreren Stufen den Wert des Unterdrucks zu erhöhen und/oder den mit Unterdruck beaufschlagten Bereich zu vergrößern.

12. Vorrichtung nach Anspruch 11, mit einer Steuereinrichtung (8) zum Ansteuern sowohl der Heizeinrichtung (6) als auch der Einrichtung zum Bereitstellen von Unterdruck, wobei die Steuereinrichtung ausgelegt, insbesondere programmiert ist, zunächst die Heizeinrichtung (6) in Betrieb zu setzen und sodann die Einrichtung zum Bereitstellen von Unterdruck nacheinander zum Beaufschlagen eines dicht eingeklemmten Heißprägefolienabschnitts mit Unterdruck in steigendem Ausmaß zu veranlassen.

13. Verfahren zum Versetzen eines ebenen Folienabschnitts in eine nicht-ebene Gestalt, wobei der Folienabschnitt beheizt wird und durch Beaufschlagung mit Unterdruck von einer Seite her an einen Körper geschmiegt wird, wobei während einer Fortdauer des Beheizens der Unterdruck bereitgestellt wird **dadurch gekennzeichnet, dass** sein Ausmaß nach und nach stufenweise erhöht wird, indem sein Wert erhöht wird und/oder die Größe eines Bereichs, an dem er bereitgestellt wird, vergrößert wird, wobei der Unterdruck in einer oder mehreren Stufen erhöht wird, wobei die Stufen zugeschaltet werden und wobei das Einleiten einer jeweiligen Stufe die Erhöhung des Wertes des Unterdrucks beinhaltet.

## Claims

1. Method for embossing a non-planar surface (14) of a body (1) with a transfer layer (52) of a hot stamping foil (5), in which the hot stamping foil (5) with a stamping region is brought into abutment against the surface (14) of the body, and a heated stamping die (3) is pressed against the hot stamping foil (5) and the surface (14) of the body (1) such that, in the stamping region, the transfer layer (52) detaches from a support (51) of the hot stamping foil (5) and adheres to the surface (14) of the body (1), wherein the hot stamping foil (5) is pre-heated in a region comprising the entire stamping region (52) before pressing the heated stamping die (3) against the hot stamping foil (5) and the surface (14) of the body (1).

2. Method according to claim 1, in which bringing the hot stamping foil into abutment against the surface of the body comprises applying negative pressure from the side facing away from the stamping die (3), wherein the application of negative pressure takes place after the pre-heating has begun, and the pre-heating is continued until after the application of negative pressure has begun.

3. Method according to claim 2, in which the level of the negative pressure is increased, in stages or continuously, by the value of the negative pressure being increased and/or the negative pressure being applied to a larger and larger region (7, 7').

4. Method according to claim 3, in which a difference between the ambient pressure and the pressure present on the side of the hot stamping foil (5) facing away from the stamping die (3) is between 0.08 bar and 0.93 bar, and is varied in particular in different stages at a defined time interval.

5. Method according to claim 3 or 4, in which pre-heating is continued until the greatest desired negative pressure is achieved and/or the negative pressure is applied to a largest region.

6. Method according to one of the claims 2 to 5, in which the pre-heating takes place for a period of 1 to 30 s, in particular variably, and/or negative pressure is applied to a first section of the hot stamping foil for the entire duration of pre-heating, or negative pressure is applied thereto after a period of 0.1 s to 10 s after the beginning of pre-heating, and/or negative pressure is applied to a second section of the hot stamping foil after a period of between 10 s and 15 s after the beginning of pre-heating, and/or negative pressure is applied to a third section of the hot stamping foil after a period of between 15 s and 20 s after the beginning of pre-heating

7. Method according to one of the preceding claims, in which the hot stamping foil is pre-heated in the region comprising the stamping region to a temperature between 80° C and 160° C, preferably between 100° C to 130° C.

8. Method according to one of the preceding claims in which, before the beginning of pre-heating, a heating device (6) different from the stamping die (3) is moved into the vicinity of the hot stamping foil (5), and after the end of pre-heating, it is moved away from the hot stamping foil (5) in order to clear the path of the stamping die (3) to the hot stamping foil (5).

9. Method according to one of the preceding claims, in which bringing the hot stamping foil (5) into abutment against the surface (14) of the body (1) comprises clamping the hot stamping foil by means of a clamping frame (4), wherein the clamping takes place before the beginning of pre-heating.

10. Device for embossing a non-planar surface of a body (1) with a transfer layer of a hot stamping foil, having:
- a holding device (2) for holding a body (1) to be stamped,
- a supply device for supplying hot stamping foil sections of a foil strip, in particular to a work region,
- a clamping device (4) for leak-tight clamping of a hot stamping foil section (5),
- a device for providing negative pressure in a region (7) that is predetermined by the clamping device and a hot stamping foil section clamped therein;
- a heatable stamping die (3) which comprises silicone in particular,
**characterised by**
a retractable and extendable heating device (6) different from the heated stamping die (3), the device (6) being extendable into and retractable from the work region, for pre-heating the entire hot stamping foil section that is clamped in the clamping device, in particular by thermal radiation.

11. Device according to claim 10, wherein the device for providing negative pressure is designed to increase the negative pressure value in several stages and/or to increase the region to which the negative pressure is applied.

12. Device according to claim 11 having a control device (8) for controlling both the heating device (6) and the device for providing negative pressure, wherein the control device is programmed, in particular, firstly to put the heating device (6) into operation and then to trigger the device for providing negative pressure in sequence in order to apply increasing levels of negative pressure to a hot stamping foil section that is clamped in a leak-tight manner.

13. Method for transferring a planar foil section into a non-planar form, wherein the foil section is heated and, as a result of the application of negative pressure from one side, is adhered to a body, wherein while heating continues the negative pressure is provided, **characterised in that** its level is gradually increased in stages, **in that** its value is increased and/or the size of a region in which it is created is increased, wherein the negative pressure is increased in one or several stages, wherein the stages are connected and wherein the introduction of a respective stage involves increasing the value of the negative pressure.

## Revendications

1. Procédé servant à estamper une surface (14) non plane d'un corps (1) d'une couche de transfert (52) d'un film d'estampage à chaud (5), dans le cadre duquel le film d'estampage à chaud (5) est amené en appui au niveau de la surface (14) du corps par une zone d'estampage et un poinçon d'estampage (3) chauffé est pressé contre le film d'estampage à chaud (5) et contre la surface (14) du corps (1) de sorte que dans la zone d'estampage, la couche de transfert (52) se détache d'un support (51) du film d'estampage à chaud et adhère à la surface (14) du corps (1), dans lequel le film d'estampage à chaud (5) est préchauffé dans une zone comprenant la totalité de la zone d'estampage (52) avant que le poinçon d'estampage (3) chauffé ne soit pressé contre le film d'estampage à chaud (5) et contre la surface (14) du corps (1).

2. Procédé selon la revendication 1, dans le cadre duquel le fait d'amener le film d'estampage à chaud en appui au niveau de la surface du corps comprend l'application d'une dépression depuis le côté opposé au poinçon d'estampage (3), dans lequel l'application d'une dépression a lieu après le début du préchauffage et le préchauffage se poursuit encore après le début de l'application d'une dépression.

3. Procédé selon la revendication 2, dans le cadre duquel le niveau de la dépression est augmenté par paliers ou en continu en ce que la valeur de la dépression est augmentée et/ou en ce qu'une zone (7, 7') toujours plus grande est soumise à l'action de la dépression.

4. Procédé selon la revendication 3, dans le cadre duquel une différence entre la pression environnante et la pression présente au niveau du côté, opposé au poinçon d'estampage (3), du film d'estampage à chaud (5) est comprise entre 0,08 bar et 0,93 bar et varie en particulier dans différents paliers dans un laps de temps défini.

5. Procédé selon la revendication 3 ou 4, dans le cadre duquel le préchauffage se poursuit jusqu'à ce que la dépression souhaitée la plus élevée soit atteinte et/ou jusqu'à ce qu'une plus grande zone soit soumise à l'action de la dépression.

6. Procédé selon l'une quelconque des revendications 2 à 5, dans le cadre duquel le préchauffage est effectué sur une durée allant de 1 à 30 s, en particulier est effectué de manière variable, et/ou un premier tronçon du film d'estampage à chaud est soumis à l'action de la dépression sur la totalité de la durée du préchauffage ou est soumis à l'action de la dépression à partir d'un moment donné allant de 0,1 s à 10 s à compter du début du préchauffage et/ou un deuxième tronçon du film d'estampage à chaud est soumis à l'action de la dépression à partir d'un moment donné compris entre 10 s et 15 s après le début du préchauffage et/ou un troisième tronçon du film d'estampage à chaud est soumis à l'action de la dépression après une durée comprise entre 15 s et 20 s à compter du début du préchauffage.

7. Procédé selon l'une quelconque des revendications précédentes, dans le cadre duquel le film d'estampage à chaud est préchauffé dans la zone comprenant la zone d'estampage à une température comprise entre 80 °C et 160 °C, de manière préférée comprise entre 100 °C et 130 °C.

8. Procédé selon l'une quelconque des revendications précédentes, dans le cadre duquel un système de chauffage (6) différent du poinçon d'estampage (3) est déplacé, avant le début du préchauffage, à proximité du film d'estampage à chaud (5) et est éloigné du film d'estampage à chaud (5) une fois le préchauffage terminé afin de dégager la voie du poinçon d'estampage (3) en direction du film d'estampage (5).

9. Procédé selon l'une quelconque des revendications précédentes, dans le cadre duquel le fait d'amener le film d'estampage à chaud (5) en appui au niveau de la surface (14) du corps (1) comprend un serrage du film d'estampage à chaud au moyen d'un cadre de serrage (4), dans lequel le serrage a lieu avant le début du préchauffage.

10. Dispositif servant à estamper une surface non plane d'un corps (1) d'une couche de transfert d'un film d'estampage à chaud, comprenant :
- un système de maintien (2) servant à maintenir un corps (1) à estamper ;
- un système d'amenée servant à amener des tronçons de film d'estampage à chaud d'une bande de film, en particulier dans une zone de travail ;
- un système de serrage (4) servant à coincer de manière étanche un tronçon de film d'estampage à chaud (5) ;
- un système servant à fournir une dépression dans une zone (7) prédéfinie par le système de serrage et par un tronçon de film d'estampage à chaud coincé dans ce dernier ;
- un poinçon d'estampage (3) pouvant être chauffé, qui comprend en particulier de la silicone,
**caractérisé par** un système de chauffage (6) différent du poinçon d'estampage (3) chauffé, pouvant être rentré et sorti, en particulier pouvant être rentré et sorti dans et hors de la zone de travail, servant à préchauffer la totalité du tronçon de film d'estampage à chaud coincé dans le système de serrage, en particulier par un rayonnement thermique.

11. Dispositif selon la revendication 10, dans lequel le système est configuré pour fournir une dépression afin d'augmenter en plusieurs paliers la valeur de la dépression et/ou d'agrandir la zone soumise à l'action de la dépression.

12. Dispositif selon la revendication 11, comprenant un système de commande (8) servant à piloter aussi bien le système de chauffage (6) que le système servant à fournir la dépression, dans lequel le système de commande est configuré, en particulier est programmé pour mettre en service dans un premier temps le système de chauffage (6) puis pour amener le système servant à fournir la dépression afin de soumettre au fur et à mesure selon un niveau croissant un tronçon de film d'estampage à chaud coincé de manière étanche à l'action de la dépression.

13. Procédé servant à transformer un tronçon de film plan en une forme non plane, dans lequel le tronçon de film est chauffé et est appuyé au niveau d'un corps depuis un côté par l'application de la dépression, dans lequel la dépression est fournie au cours d'une durée prolongée de chauffage, **caractérisé en ce que** son niveau est augmenté progressivement par paliers **en ce que** sa valeur est augmentée et/ou la dimension d'une zone, au niveau de laquelle elle est fournie, est agrandie, dans lequel la dépression est augmentée en un ou en plusieurs paliers, dans lequel les paliers sont activés et dans lequel l'introduction d'un palier respectif renferme l'augmentation de la valeur de la dépression.
